# FASCICULE DE BREVET EUROPEEN

(11) **EP 4 049 388 B1**
(45) Date de publication et mention de la délivrance du brevet: **16.04.2025**
(21) Numéro de dépôt: 20796869.4
(22) Date de dépôt: 06.10.2020
(51) Int. Cl.: H04B 13/00

(54) **PROCEDE ET TERMINAL DE VALIDATION D'UNE TRANSACTION LORS D'UNE COMMUNICATION RADIO INTRACORPORELLE**
VERFAHREN UND ENDGERÄT ZUR VALIDIERUNG EINER TRANSAKTION WÄHREND EINER INTRAKORPORALEN FUNKKOMMUNIKATION
METHOD AND TERMINAL FOR VALIDATING A TRANSACTION DURING AN INTRA-BODY RADIO COMMUNICATION

(30) Priorité: 24.10.2019 FR 1911932
(43) Date de publication de la demande: 31.08.2022
(73) Titulaire: Orange, 92130 Issy-les-Moulineaux (FR)
(72) Inventeur: DUSSAUME, Philippe, 92326 CHÂTILLON CEDEX (FR); JAVAUDIN, Jean-Philippe, 92326 CHÂTILLON CEDEX (FR)
(86) Numéro de dépôt international: PCT/FR2020/051746
(87) Numéro de publication internationale: WO 2021/079038

(56) Documents cités:
- EP-A1- 3 257 004
- WO-A1-2016/001506
- WO-A1-2019/063902
- JP-B2- 5 358 771

## Description

### Domaine de l'invention

L'invention concerne les communications sans fils à courte portée pour la transmission de données entre deux dispositifs par l'intermédiaire du corps humain. Plus précisément, l'invention porte sur un système pour effectuer des transactions entre un terminal porté par un utilisateur et un dispositif de communication tel qu'une station de base ou un lecteur, connecté par exemple à un serveur de transactions, en utilisant la capacité de conductivité du corps humain pour transmettre les ondes électromagnétiques porteuses de telles communications sans fil.

### Art antérieur

Les communications en champ proche, usuellement connues sous le sigle « NFC » (pour« Near Field Communication»), basées principalement sur la norme ISO (International Standard Organisation) 14443, utilisent des technologies sans fil pour permettre un échange d'informations entre deux périphériques éloignés d'une courte distance, typiquement inférieure à dix centimètres. Les communications de ce type offrent de nombreuses applications, par exemple dans les domaines du paiement ou du transport. Le récepteur en champ proche reçoit un message de la part de l'émetteur en champ proche. Un tel message peut correspondre, dans le contexte précité, à la validation d'une transaction telle que par exemple l'échange d'un ticket (de spectacle, de transport, etc.), un paiement, le lancement d'un service personnalisé sur un ordinateur, un téléviseur, l'accès à un local, etc.

On connaît dans l'état de la technique un système permettant d'échanger de tels messages, dans lequel le récepteur est contenu dans un terminal porté par un utilisateur, les messages étant reçus par le récepteur au cours d'une communication intracorporelle via l'utilisateur du terminal. Une communication intracorporelle utilise la capacité de conductivité du corps humain pour transmettre les ondes électromagnétiques porteuses de communications sans fil. Une telle technologie est appelée IBC (pour « Intra-Body Communication » en anglais).

Un tel système de communication sans fil est par exemple décrit dans le document W02012/131224. Le système comprend un terminal porté par un utilisateur, dont l'antenne est directement en contact avec, ou très proche, de l'utilisateur. Un signal émis par le terminal est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne est située à proximité (à moins de quelques centimètres) du corps de l'utilisateur et conçue de manière à rendre l'objectif attendu. L'antenne est constituée à cet effet d'un ensemble de spires en nombre et disposition adéquats pour émettre de façon optimale l'onde à travers le corps humain. Ce système selon l'état de l'art comporte aussi un dispositif de communication NFC comprenant un récepteur qui comprend une surface sensitive constituée d'une antenne de même type que celle de l'émetteur et sur laquelle l'utilisateur peut effectuer un geste de rapprochement, par exemple poser la main sur l'antenne, l'effleurer ou ne faire que rapprocher la main de l'antenne à quelques centimètres de celle-ci. Le dispositif de communication NFC reçoit le signal du fait du contact physique, ou du moins de la proximité, de l'utilisateur avec l'antenne. Le signal reçu est démodulé et transmis à un équipement adapté pour effectuer des traitements, en l'espèce pour mettre en œuvre la transaction (paiement, ouverture de porte, etc.)

Afin de sécuriser ce type de transaction, il est proposé dans le document W02016/001506 de détecter et valider un geste de rapprochement volontaire de l'utilisateur, afin de s'assurer que le geste d'approche est réellement effectué. Un tel système est également décrit dans le document WO 2019/063902. L'inconvénient d'un tel système réside dans le fait qu'en présence de plusieurs dispositifs de communication situés à proximité du terminal de l'utilisateur, même si l'utilisateur effectue un geste de rapprochement volontaire par rapport à un premier dispositif de communication, mais pas par rapport à un deuxième dispositif de communication, il se peut que la transaction échoue, dans le cas où le signal reçu par le terminal de l'utilisateur par communication intracorporelle, en provenance du deuxième dispositif de communication, a une puissance plus élevée que celle du signal caractérisant le geste de rapprochement volontaire de l'utilisateur, reçu par communication intracorporelle en provenance du premier dispositif.

En effet, c'est la trame contenue dans le signal émis par ce deuxième dispositif de communication qui sera décodée par le terminal de l'utilisateur et non la trame de données contenue dans le signal moins puissant caractérisant le geste de rapprochement de l'utilisateur, tel qu'émis par le premier dispositif de communication.

Ainsi, le terminal de l'utilisateur sera en mesure, via une application dédiée, de détecter le geste de rapprochement volontaire de l'utilisateur par rapport au premier dispositif de communication, par analyse de l'évolution de l'enveloppe du signal NFC reçu, mais risque d'associer cette enveloppe de façon erronée à une approche du deuxième dispositif de communication en lien avec le décodage des trames reçues en provenance de ce dernier.

La transaction entre le terminal et le premier dispositif de communication ne pourra donc pas aboutir.

### Objet et résumé de l'invention

Un des buts de l'invention est de remédier à des inconvénients de l'état de la technique précité.

A cet effet, un objet de la présente invention concerne un procédé de réception de signal au cours d'une communication intracorporelle via un utilisateur porteur d'un terminal, comprenant ce qui suit, au niveau du terminal :
- recevoir en provenance d'un dispositif de communication un signal caractérisant qu'un geste de rapprochement de l'utilisateur avec le dispositif a été effectué entre deux instants,
- dans le signal reçu, détecter dans quel intervalle temporel, compris entre les deux instants, l'amplitude du signal est maximale.

Un tel procédé est remarquable en ce qu'il comprend ce qui suit, au niveau du terminal :
- à partir du signal reçu, détecter dans l'intervalle temporel une information déterminant que l'utilisateur a touché le dispositif ou non entre les deux instants,
- valider une transaction en fonction de la valeur de ladite information détectée. Un tel procédé de réception selon l'invention permet ainsi au terminal porté par l'utilisateur de vérifier, parmi les trames de données qu'il reçoit par communication intracorporelle, en provenance de plusieurs dispositifs de communication situés à proximité du terminal, si un de ces dispositifs a été touché ou non par l'utilisateur, et de valider une transaction via soit le dispositif de communication que l'utilisateur a effectivement touché, soit un autre terminal à proximité, ou bien, au contraire, de refuser toute transaction dans le cas où le terminal reçoit en provenance de chacun d'entre eux une information explicite selon laquelle aucun de ces dispositifs n'a été touché par l'utilisateur.

L'invention permet ainsi de façon très simple, grâce à une modification du signal caractérisant le geste de rapprochement de l'utilisateur, par l'ajout d'une information déterminant que l'utilisateur a touché le dispositif ou non entre les deux instants, de vérifier par un terminal porté par l'utilisateur, quel est le dispositif qui a été effectivement touché par l'utilisateur du terminal. En outre, en corrélant cette information proche temporellement de l'amplitude maximale du signal caractérisant que l'utilisateur a touché le dispositif entre deux instants, le terminal est en mesure de reconnaître avec une bonne probabilité, quel est, parmi les dispositifs de communications qui se trouvent à proximité du terminal, le dispositif de communication, via lequel une transaction requise par le terminal va pouvoir être mise en œuvre.

On entend par communication intracorporelle une communication qui utilise la capacité de conductivité du corps humain pour transmettre les ondes électromagnétiques porteuses de communications sans fil. Une telle technologie est appelée IBC.

Selon un mode de réalisation particulier, l'information déterminant que l'utilisateur a touché le dispositif ou non est contenue dans une trame de données radio reçue en provenance du dispositif de communication, ladite trame étant associée à l'intervalle temporel où l'amplitude du signal est maximale.

Grâce à la réception de la trame de données radio qui contient ladite information, de façon synchronisée avec la réception du signal caractérisant que l'utilisateur a touché le dispositif entre deux instants, et plus précisément dans l'intervalle temporel compris entre les deux instants, où l'amplitude du signal est maximale, le terminal est en mesure de corréler très simplement l'identité, et donc la localisation du dispositif, avec des données radio de la trame reçue qui ont été générées par le dispositif, telles que par exemple un identifiant du terminal, un identifiant de service, une donnée aléatoire, etc.

Selon un autre mode de réalisation particulier, l'information déterminant que l'utilisateur a touché le dispositif ou non est contenue dans une trame de données radio reçue en provenance du dispositif de communication, ladite trame étant associée à l'intervalle temporel où l'amplitude du signal est maximale, et dans lequel ladite trame est distincte d'une autre trame de données radio reçue en provenance du dispositif de communication et associée à l'intervalle temporel où l'amplitude du signal est maximale.

Grâce à la réception de la trame de données radio qui contient ladite information, de façon synchronisée avec la réception du signal caractérisant que l'utilisateur a touché le dispositif entre deux instants, et plus précisément dans l'intervalle temporel compris entre les deux instants, où l'amplitude du signal est maximale, le terminal est en mesure de corréler très simplement l'identité, et donc la localisation du dispositif, avec des données radio d'une autre trame qui ont été générées par le dispositif, ladite autre trame étant reçue en parallèle par le terminal, également entre les deux instants durant lesquels l'utilisateur a touché le dispositif. De telles données radio contenues dans cette autre trame comprennent par exemple un identifiant du terminal, un identifiant de service, une donnée aléatoire, etc.

Selon un autre mode de réalisation particulier, l'information déterminant que l'utilisateur a touché ou non le dispositif de communication comprend un bit dont une première valeur détermine que l'utilisateur a touché le dispositif de communication, et dont une deuxième valeur détermine que l'utilisateur n'a pas touché le dispositif de communication.

La représentation sous forme binaire de l'information déterminant que l'utilisateur a touché le dispositif ou non permet d'optimiser la réduction du coût de signalisation de la transmission des trames de données radio entre le dispositif de communication et le terminal.

Les différents modes ou caractéristiques de réalisation précités peuvent être ajoutés indépendamment ou en combinaison les uns avec les autres, au procédé de réception défini ci-dessus.

L'invention concerne également un terminal ayant des capacités de communication intracorporelle via un utilisateur porteur dudit terminal, ledit terminal comprenant un processeur qui est configuré pour mettre en œuvre ce qui suit :
- recevoir en provenance d'un dispositif de communication un signal caractérisant qu'un geste de rapprochement de l'utilisateur avec le dispositif a été effectué entre deux instants,
- dans le signal reçu, détecter dans quel intervalle temporel, compris entre les deux instants, l'amplitude du signal est maximale.

Un tel terminal est remarquable en ce que le processeur est configuré pour mettre en œuvre ce qui suit :
- à partir du signal reçu, détecter dans l'intervalle temporel une information déterminant que l'utilisateur a touché le dispositif ou non entre les deux instants,
- valider une transaction en fonction de la valeur de ladite information détectée. Un tel terminal de communication est notamment apte à mettre en œuvre le procédé de réception précité.

L'invention concerne également un procédé d'émission de signal au cours d'une communication intracorporelle via un utilisateur porteur d'un terminal, comprenant ce qui suit, au niveau d'un dispositif de communication :
- détecter un geste de rapprochement de l'utilisateur avec le dispositif de communication, ledit geste étant effectué entre deux instants,
- émettre vers le terminal un signal caractérisant le geste de rapprochement.

Un tel procédé d'émission est remarquable en ce que le dispositif de communication génère dans le signal dans un intervalle temporel compris entre les deux instants où l'amplitude du signal est maximale une information déterminant que l'utilisateur a touché le dispositif ou non.

Selon un mode de réalisation particulier, l'information déterminant que l'utilisateur a touché le dispositif ou non est contenue dans une trame de données radio envoyée au terminal, ladite trame ayant été générée entre les deux instants où l'amplitude du signal est maximale.

Selon un autre mode de réalisation particulier, l'information déterminant que l'utilisateur a touché le dispositif ou non est contenue dans une trame de données radio envoyée au terminal, ladite trame ayant été générée entre les deux instants où l'amplitude du signal est maximale, et dans lequel ladite trame est distincte d'une autre trame de données radio envoyée au terminal et ayant été générée entre les deux instants où l'amplitude du signal est maximale.

Selon un autre mode de réalisation particulier, l'information déterminant que l'utilisateur a touché ou non le dispositif de communication comprend un bit dont une première valeur détermine que l'utilisateur a touché le dispositif de communication, et dont une deuxième valeur détermine que l'utilisateur n'a pas touché le dispositif de communication.

Les différents modes ou caractéristiques de réalisation précités peuvent être ajoutés indépendamment ou en combinaison les uns avec les autres, au procédé d'émission défini ci-dessus.

L'invention concerne également un dispositif de communication ayant des capacités d'émission de signal au cours d'une communication intracorporelle via un utilisateur porteur d'un terminal, ledit dispositif comprenant un processeur qui est configuré pour mettre en œuvre ce qui suit :
- détecter un geste de rapprochement de l'utilisateur avec le dispositif de communication, ledit geste étant effectué entre deux instants,
- émettre vers le terminal un signal caractérisant le geste de rapprochement de l'utilisateur avec le dispositif.

Un tel dispositif est remarquable en ce que le processeur est configuré pour générer dans le signal dans un intervalle temporel compris entre les deux instants où l'amplitude du signal est maximale une information déterminant que l'utilisateur a touché le dispositif ou non

L'invention concerne encore un programme d'ordinateur comportant des instructions pour la mise en œuvre du procédé de réception ou d'émission selon l'invention, selon l'un quelconque des modes particuliers de réalisation décrits précédemment, lorsque ledit programme est exécuté par un processeur.

De telles instructions peuvent être stockées durablement dans un support mémoire non transitoire du terminal de communication mettant en œuvre le procédé de réception ou du dispositif de communication mettant en œuvre le procédé d'émission.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de réception ou d'émission précité.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
[Fig. 1] la figure 1 représente un système de communication selon un mode de réalisation de l'invention, lorsqu'un terminal porté par un utilisateur réalise une transaction avec un dispositif de communication,
[Fig. 2] la figure 2 représente un terminal dans un mode de réalisation particulier de l'invention,
[Fig. 3] la figure 3 représente un dispositif de communication dans un mode de réalisation particulier de l'invention,
[Fig. 4] la figure 4 représente les principales actions mises en œuvre dans le procédé d'émission/réception de signal, selon un mode de réalisation particulier de l'invention,
[Fig.5] la figure 5 représente un mode de réalisation d'un signal représentatif d'un geste de rapprochement d'un utilisateur avec un dispositif de communication selon l'invention.

### Description détaillée d'un mode de réalisation de l'invention

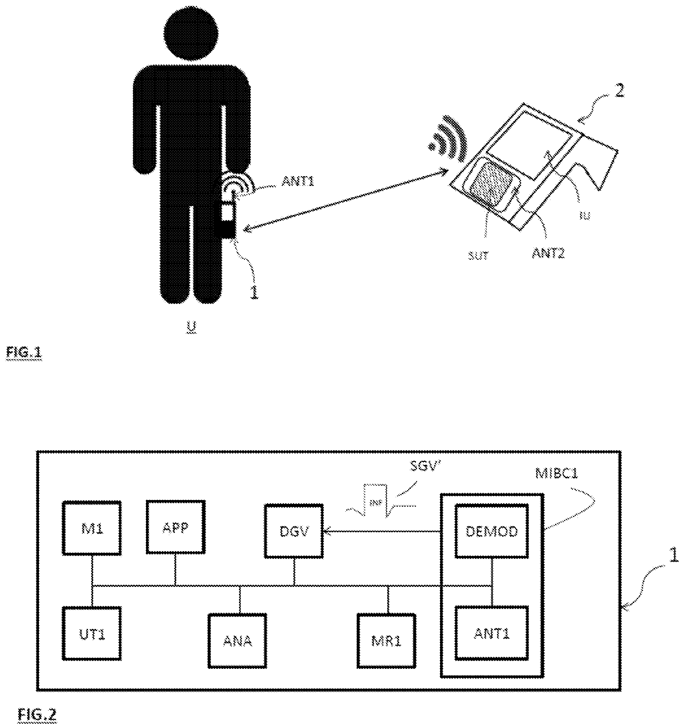

La figure 1 représente un système de communication sans fil selon un mode de réalisation de l'invention.

Un tel système comprend :
- un terminal 1 porté par un utilisateur U, le terminal 1 étant équipé d'un module NFC-IBC (non représenté) et d'une antenne IBC désignée par la référence ANT1,
- un dispositif de communication 2, tel que par exemple une station de base, ou borne, équipé d'un module NFC.

Le terminal 1 selon l'invention est adapté pour émettre et recevoir des signaux radioélectriques, que l'on appelle aussi ondes porteuses radio, via l'antenne ANT1, à travers le corps d'un utilisateur U. A cette fin, le terminal 1 est situé à proximité de l'utilisateur U, sans nécessairement être en contact direct avec celui-ci. Par exemple, le terminal 1 est placé à l'intérieur d'une poche ou d'un sac porté contre l'utilisateur. Dans ces configurations, on estime que le terminal 1 n'est pas éloigné de plus de quelques centimètres du corps de l'utilisateur U. La distance est par exemple inférieure à 10 cm. Le terminal 1 est équipé d'une batterie ou de piles, pour un fonctionnement autonome. Il s'agit par exemple d'un téléphone mobile équipé d'une antenne NFC utilisée comme antenne pour émettre et recevoir les signaux électriques modulés ou non modulés. Dans le contexte de cet exemple de réalisation, et comme déjà expliqué auparavant, l'antenne NFC ANT1 est également IBC. A cet effet, l'antenne ANT1 est conçue de manière à recevoir de façon optimale l'onde électromagnétique à travers le corps humain. Pour se faire, elle est constituée d'un ensemble de spires en nombre et disposition adéquats.

Le terminal 1 peut bien sûr prendre d'autres formes. Par exemple il peut s'agir de tout dispositif portable apte à communiquer en champ proche avec des émetteurs NFC, directement ou via le corps humain (bracelet, tablette électronique, collier, etc.)

Le dispositif de communication 2 est un équipement apte à émettre et recevoir des signaux radioélectriques, ou ondes porteuses, notamment à travers le corps de l'utilisateur, via une antenne IBC désignée par la référence ANT2. Dans cet exemple de réalisation, le dispositif de communication 2 est un lecteur qui comprend une surface sensitive SUT constituée par l'antenne ANT2 éventuellement protégée et adaptée pour réagir lorsque l'utilisateur la touche, par exemple en posant la main dessus, ou l'approche de très près (quelques centimètres). A cet effet, selon un exemple de réalisation, la surface sensitive SUT peut être munie d'un ou de plusieurs détecteurs capacitifs (non représentés). D'autres technologies de détection du toucher ou quasi contact peuvent bien sûr être mises en œuvre, telles que par exemple la technologie à onde de surface, la technologie à infra-rouge, la technologie à ultrasons, etc... Le dispositif de communication 2 comprend aussi une interface utilisateur (aussi appelée IHM) référencée IU, destinée à afficher des messages à l'attention de l'utilisateur et un équipement (non représenté sur la figure 1) apte à effectuer des traitements, tel un PC ou un serveur. La surface sensitive SUT recouvrant l'antenne, l'interface utilisateur IU et l'équipement sont connectés par exemple au moyen d'une liaison filaire, ou à travers un réseau, par exemple un réseau mobile, ou le réseau Internet. Le dispositif de communication 2 est paramétré pour fonctionner en IBC par le chargement d'un programme (logiciel) spécifique, sans modification du hardware.

Selon un mode de réalisation alternatif, le dispositif de communication 2 consiste en une étiquette électronique de gondole (EEG) que l'utilisateur vient toucher afin de recevoir une information de personnalisation d'un produit (réduction, avantage, promotion, information sur le produit, etc.).

### Description d'un mode de réalisation du terminal 1

La figure 2 présente la structure simplifiée du terminal 1adapté pour mettre en œuvre le procédé de réception de signal qui va être décrit ci-dessous.

Le terminal 1est par exemple un terminal mobile de type *smartphone* adapté pour mettre en œuvre l'invention. Selon un autre exemple, le terminal est une simple carte électronique équipée des modules suivants :
- une unité de traitement, telle un processeur ou « CPU » (pour « Central Processing Unit »), référencée UT1, destinée à charger des instructions en mémoire, à les exécuter, à effectuer des opérations,
- un ensemble M1 de mémoires, dont une mémoire volatile, ou "RAM" (pour "Random Access Memory"), utilisée pour exécuter des instructions de code, stocker des variables, etc., et dont une mémoire non volatile de type « ROM » (de l'anglais « Read Only Memory »), ou «EEPROM » (pour « Electronically Erasable Programmable Read Only Memory ») destinée à contenir des informations persistantes, notamment les données d'identification de l'utilisateur UT,
- un module IBC référencé MIBC1, incluant:
   - une antenne ANT1 adaptée notamment pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain ;
   - un démodulateur DEMOD, destiné à recevoir via l'antenne un signal électrique modulé et à le transformer en un signal numérique destiné à être transmis à l'unité de traitement ;
   - les composantes logicielles (firmware, etc.) nécessaires à la mise en œuvre des communications IBC ;
- un module radio MR1 de type Bluetooth ou WiFi destiné à transmettre notamment des données en retour depuis le terminal 1 vers le dispositif 2 ou tout autre dispositif approprié,
- de préférence, et notamment si les modules suivants ne sont pas mis en œuvre sur un autre dispositif :
   - un module de détection de geste volontaire, référencé DGV, pour analyser les signaux reçus par le module MIBC1 et décider s'il s'agit ou non d'un signal SGV' correspondant à un mouvement comportant un geste volontaire de l'utilisateur U ;
   - un module d'analyse ANA pour analyser tout signal reçu en provenance d'un dispositif de communication 2, notamment suite à un mouvement volontaire de l'utilisateur, et détecter dans l'intervalle temporel où l'amplitude du signal reçu est maximale, si le signal reçu est associé à une information déterminant que l'utilisateur U a touché le dispositif 2 ou pas ;
   - un module applicatif APP pour, en fonction de la valeur de l'information détectée, valider ou non la transaction adéquate requise par le terminal 1, soit avec le dispositif 2, soit avec tout autre dispositif/équipement approprié.

### Description d'un mode de réalisation du dispositif de communication 2

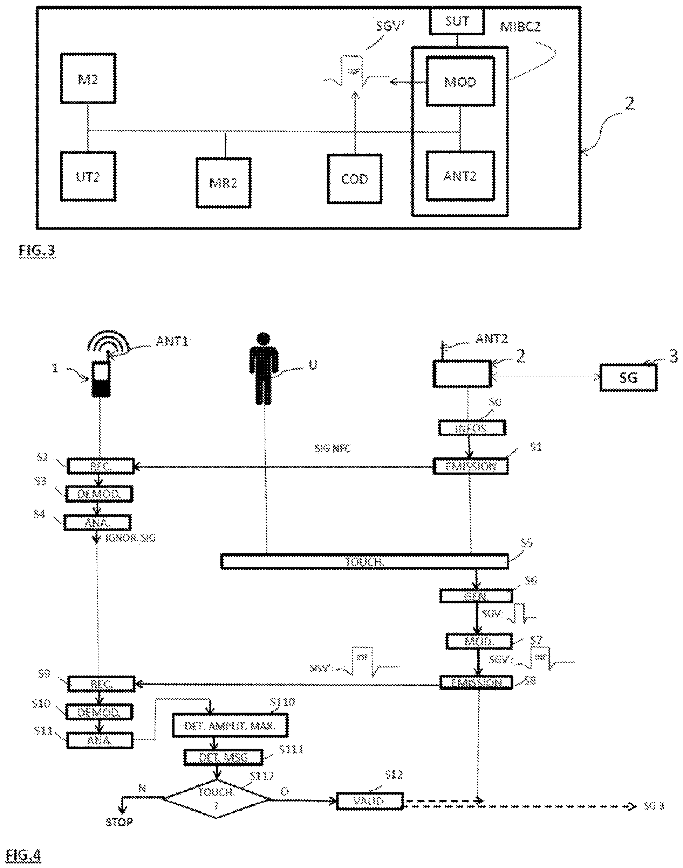

La figure 3 présente la structure simplifiée du dispositif de communication 2 adapté pour mettre en œuvre le procédé d'émission de signal qui va être décrit ci-dessous. Le dispositif 2 comprend plusieurs modules qui sont similaires à ceux du terminal 1 décrit en relation avec la figure 2 :
- une unité de traitement, telle un processeur ou CPU, référencée UT2, utilisée pour exécuter des instructions de code, stocker des variables, etc.,
- un ensemble M2 de mémoires, dont une mémoire volatile ou "RAM" (pour "Random Access Memory") utilisée pour exécuter des instructions de code, stocker des variables, etc., et une mémoire non volatile, de type « ROM » ou « EEPROM » destinée à contenir des informations persistantes,
- un module IBC référencé MIBC2, incluant :
   - une antenne ANT2 adaptée notamment pour émettre des signaux sur la voie radio et via le corps humain, et éventuellement en recevoir ;
   - un modulateur MOD destiné à adapter un signal numérique produit par l'unité de traitement UT2 en un signal électrique modulé SGV', destiné à être transmis, via l'antenne ANT2, notamment à travers le corps de l'utilisateur. L'opération de modulation effectuée par le modulateur est par exemple une modulation d'amplitude : le signal est un signal à 13,56 MHz modulé en amplitude avec un taux de modulation d'environ 10% (caractéristique connue du type B selon la norme NFC). L'invention n'est cependant pas limitée à ce type de modulation. Dans un autre exemple de réalisation, la modulation est une modulation de fréquence, moins sensible aux parasites, ou, une modulation de phase ;
- une surface sensitive/tactile SUT adaptée pour réagir lorsque l'utilisateur U la touche (contact, quasi contact, effleurement, tapotement etc.). Dans l'exemple décrit ici, cette surface correspond à l'antenne, de manière à ce qu'un signal électrique modulé émis via l'antenne ANT2 soit apte à être véhiculé par le corps de l'utilisateur U qui touche la surface SUT. Dans un exemple de réalisation, l'antenne peut être intégrée dans la surface. La surface est agencée de manière à coopérer avec l'unité de traitement UT2 pour mettre en œuvre les étapes du procédé d'émission de signal qui sera décrit ultérieurement ;
- un module de codage COD pour générer une information déterminant que l'utilisateur U a touché le dispositif 2 ou non,
- un module radio MR2 de type Bluetooth ou Wi-Fi destiné notamment à recevoir des données en retour depuis le terminal 1 (signaux reçus par le terminal 1, données relatives à la transaction, etc.) et/ou à rentrer en contact avec un autre dispositif pour valider la transaction (porte, objet connecté, etc.),
- les composantes logicielles (firmware, etc.) nécessaires à la mise en œuvre des communications IBC,
- optionnellement une interface utilisateur (IHM) adaptée pour transmettre à l'utilisateur U des instructions ou des messages d'information. Par exemple, l'interface utilisateur est un écran sur lequel les messages et instructions sont affichés. Dans un autre exemple de réalisation, l'interface est une interface audio permettant de jouer les messages et instructions, par exemple pour signifier à l'utilisateur qu'il peut retirer sa main de la surface SUT. L'interface peut aussi comporter un clavier, un micro, etc.

On rappelle que n'importe quel lecteur du commerce (par exemple un TPE pour « terminal de paiement électronique ») peut avantageusement être utilisé en tant que dispositif de communication 2, à condition de disposer d'une surface tactile et de bénéficier du module MIBC2, après une simple mise à jour du logiciel du lecteur (installation et/ou mise à jour de l'application et paramétrage de l'émission NFC) pour le rendre apte à émettre un message possédant les caractéristiques (fréquence, modulation, etc.) IBC via son antenne.

### Description d'un mode de réalisation d'un procédé de communication intracorporelle sans fil bidirectionnelle

En référence à la figure 4, on décrit maintenant le déroulement d'un procédé de communication sans fil bidirectionnelle à travers le corps humain d'un utilisateur U, entre le terminal 1 précité et le dispositif de communication 2 précité, selon un mode de réalisation de l'invention.

Dans une étape initiale S0, en réponse à l'approche de l'utilisateur U du dispositif 2, le dispositif 2 restitue des informations à l'utilisateur U. Selon un exemple de réalisation particulier, il peut s'agir d'un message d'information tel que par exemple : « pour valider le montant de la transaction, veuillez toucher ou approcher la surface sensible SUT », « pour valider l'accès à la bibliothèque, veuillez toucher ou approcher la surface sensible SUT », etc....Un tel message d'informations peut être restitué textuellement et/ou vocalement.

En S1, le dispositif 2 émet via son antenne ANT2 un signal électrique modulé de type NFC associé à un message de recherche destiné à un dispositif situé à proximité du dispositif 2, en l'espèce le terminal 1 porté par l'utilisateur U. Un tel signal, désigné par la référence SIG sur la figure 4, contient classiquement une trame de données par défaut ainsi qu'une charge utile contenant par exemple un nombre aléatoire, un code, une clé, etc... Cette trame constitue un message de recherche transmis dans le signal SIG émis par le dispositif 2 qui est destiné selon cet exemple à entrer en contact avec un dispositif portatif situé à proximité du dispositif 2. Il est propre au service de transaction proposé : paiement, accès à un local, etc....

Le signal SIG peut être émis en continu pendant une durée prédéfinie.

Au terme de cette durée d'émission, le dispositif 2 passe en mode réception.

En S2, le signal SIG émis en S1 est détecté et reçu par le terminal 1.

En S3, le terminal 1 démodule le signal SIG reçu en un signal numérique.

En S4, le terminal 1 analyse, via le module ANA de la figure 2, le signal numérique ainsi obtenu. Au cours de cette analyse, le terminal 1 détecte au moins un des éléments d'information correspondant à l'interrogation du dispositif 2, à savoir dans cet exemple un service utilisant la technologie IBC. L'application APP ne détectant pas à ce stade d'informations relatives à un geste volontaire de l'utilisateur U par rapport au dispositif 2, le signal SIG est ignoré par le terminal 1.

Le procédé selon l'invention se déroule alors comme suit :
En S5, l'utilisateur U touche la surface sensible SUT du dispositif 2, par exemple en posant la main sur celle-ci ou en approchant la main à quelques centimètres de la surface.

En S6, le dispositif 2 génère un signal électrique SGV représentatif du geste volontaire de l'utilisateur U.

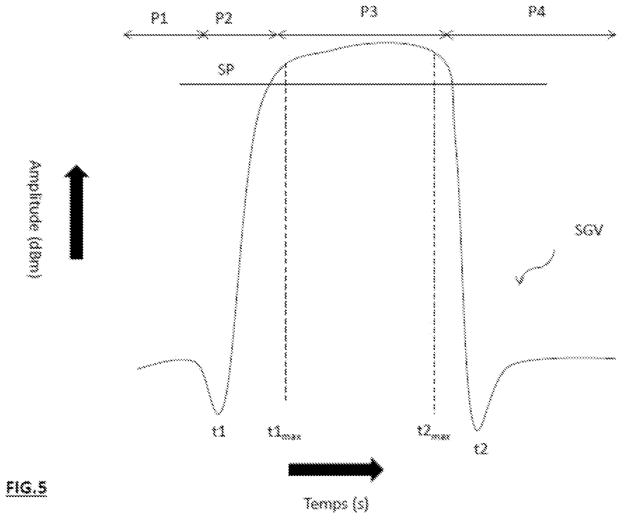

Sur la figure 5, le signal SGV comprend :
- une première portion P1 caractérisant le fait que l'utilisateur U n'a pas encore touché ou approché de très près la surface sensible SUT du dispositif 2. A cet effet, la puissance ou l'amplitude du signal SGV est faible, par exemple de l'ordre de - 70dB ;
- une deuxième portion P2 caractérisant le fait que l'utilisateur U a touché ou approché de très près la surface sensible SUT du dispositif 2. A cet effet, le signal SGV augmente brutalement jusqu'à atteindre une amplitude de l'ordre par exemple de -50 dB, à un instant t1ₘₐₓ ;
- une troisième portion P3 caractérisant la durée pendant laquelle l'utilisateur U reste en contact ou en quasi contact avec la surface sensible SUT du dispositif 2. A cet effet, le signal SGV atteint une amplitude maximale de l'ordre de -50 dB jusqu'à un instant t2ₘₐₓ ;
- une quatrième portion P4 caractérisant le fait qu'à t2ₘₐₓ, l'utilisateur U a arrêté de toucher ou d'approcher de très près la surface sensible SUT du dispositif 2. A cet effet, le signal SGV diminue brutalement jusqu'à atteindre une amplitude de l'ordre de -70 dB.

En référence à nouveau à la figure 4, en S7, le dispositif 2 module le signal SGV en lui associant une information INF déterminant que l'utilisateur U a touché (ou quasi touché) ou non la surface SUT du dispositif 2 entre les instants t1ₘₐₓ et t2ₘₐₓ. A titre d'exemple non exhaustif, une telle information est codée par le module COD de la figure 3 sur un bit, soit à 1, déterminant que l'utilisateur U a touché ou quasi touché la surface SUT du dispositif 2, soit à 0, déterminant que l'utilisateur U n'a pas touché ou quasi touché la surface SUT du dispositif 2.

Bien entendu, l'information INF pourrait se présenter sous une forme textuelle, alphanumérique, etc... Un signal SGV modifié, désigné SGV' est alors obtenu à l'issue de S7.

Dans l'exemple représenté, le module COD du dispositif 2 génère l'information INF à 1 car l'utilisateur U a touché ou quasi touché la surface SUT.

En S8, le dispositif 2 émet via son antenne ANT2 un signal électrique modulé SGV' associé à un message MSG de validation ou de non validation du geste de l'utilisateur U, destiné au terminal 1 porté par l'utilisateur U. Le message MSG transmis dans le signal électrique modulé SGV' émis par le dispositif 2 comprend un identifiant ID associé au dispositif 2, ainsi que l'information INF déterminant que l'utilisateur U a touché (ou quasi touché) ou non la surface SUT du dispositif 2 entre les instants t1ₘₐₓ et t2ₘₐₓ.

L'identifiant ID est une référence unique associée au dispositif 2 ou bien encore un identifiant de localisation du dispositif 2 (coordonnées GPS, adresse URL, etc...).

Le message MSG se présente sous la forme d'une seule trame de données contenant :
- l'identifiant ID du dispositif de communication 2,
- un bit à 1 ou à 0 selon que l'utilisateur U a touché (ou quasi touché) ou pas la surface SUT du dispositif 2 entre les instants t1ₘₐₓ et t2ₘₐₓ.

D'autres informations peuvent être contenues dans la trame de données, telles que par exemple un identifiant de service et/ou encore une donnée aléatoire.

A titre d'alternative, le message MSG comprend :
- une première trame de données contenant l'information INF à 1 ou à 0 selon que l'utilisateur U a touché (ou quasi touché) ou pas la surface SUT du dispositif 2 entre les instants t1ₘₐₓ et t2ₘₐₓ,
- une deuxième trame de données contenant l'identifiant ID du dispositif de communication 2 et éventuellement les autres informations, telles que par exemple un identifiant de service et/ou encore une donnée aléatoire.

L'identifiant ID peut être fourni par le dispositif 2 qui l'a stocké en local ou bien sur requête auprès d'un système de gestion SG 3 relié au dispositif 2 via un réseau de communication.

En variante, l'information INF peut être générée également par le système de gestion 3 sur requête du dispositif 2 afin d'alléger les ressources en calculs de ce dernier. En S9, le signal électrique modulé SGV' émis en S8 est détecté et reçu par le terminal 1, via le corps de l'utilisateur U, en passant par l'antenne ANT1.

En S10, le terminal 1 démodule le signal électrique SGV' reçu en un signal numérique, via son module DEMOD (fig.2).

En S11, via son module DGV (fig.2), le terminal 1 analyse le signal numérique ainsi obtenu afin de valider si le geste de l'utilisateur U correspond ou non à un geste volontaire de la part de ce dernier et si la surface SUT du dispositif 2 a été touchée (ou quasi touchée) ou non par l'utilisateur U.

Au cours de cette analyse, le terminal 1 détecte en S110 que l'amplitude du signal SGV' est maximale entre les instants t1ₘₐₓ et t2ₘₐₓ et que le signal SGV' a dépassé un seuil prédéterminé SP entre ces deux instants. Une première condition selon laquelle le signal SGV' est représentatif d'un geste de rapprochement de l'utilisateur U avec le dispositif 2 est donc remplie.

En S111, à partir du signal numérique obtenu, le terminal 1 détecte le message MSG précité, c'est-à-dire l'information INF, l'identifiant ID du dispositif 2 et éventuellement les autres informations précitées, telles que par exemple un identifiant de service et/ou encore une donnée aléatoire.

En S112, e terminal 1 vérifie alors, via son module ANA, si l'information INF est à 0 ou à 1.

Si INF est à 0, la condition supplémentaire de validation du geste de rapprochement volontaire de l'utilisateur U n'est pas remplie puisque la valeur à 0 de l'information INF est représentative du fait que l'utilisateur U n'a pas touché la surface tactile SUT du dispositif 2 correspondant à l'identifiant ID détecté. Le terminal 1 ne poursuit donc pas la transaction.

Si INF est à 1, comme dans l'exemple représenté, la condition supplémentaire de validation du geste de rapprochement volontaire de l'utilisateur U est remplie puisque la valeur à 1 de l'information INF est représentative du fait que l'utilisateur U a touché ou quasi touché la surface tactile SUT du dispositif 2 correspondant à l'identifiant ID détecté.

En S12, le terminal 1 valide alors de façon classique le contenu du message MSG et entre alors en communication soit avec le dispositif 2 si ce dernier a des capacités de gestion suffisante ou bien avec le système de gestion SG 3 ou tout autre équipement de gestion approprié, pour activer le service requis par le terminal 1 (valider le montant d'une transaction, valider l'accès à un local, valider un solde de tickets de transport, etc...).

## Revendications

1. Procédé de réception de signal au cours d'une communication intracorporelle via un utilisateur porteur d'un terminal (1), comprenant ce qui suit, au niveau du terminal :
- recevoir (S9) en provenance d'un dispositif de communication (2) un signal caractérisant qu'un geste de rapprochement de l'utilisateur avec le dispositif a été effectué entre deux instants,
- dans le signal reçu, détecter (S110) dans quel intervalle temporel, compris entre les deux instants, l'amplitude du signal est maximale,
ledit procédé étant **caractérisé en ce qu'**il comprend ce qui suit, au niveau du terminal :
- à partir du signal reçu, détecter (S111, S112) dans l'intervalle temporel une information (INF) déterminant que l'utilisateur a touché le dispositif ou non entre les deux instants,
- valider (S12) une transaction en fonction de la valeur de ladite information détectée.

2. Procédé de réception selon la revendication 1, dans lequel l'information déterminant que l'utilisateur a touché le dispositif ou non est contenue dans une trame de données radio reçue en provenance du dispositif de communication, ladite trame étant associée à l'intervalle temporel où l'amplitude du signal est maximale.

3. Procédé de réception selon la revendication 1, dans lequel l'information déterminant que l'utilisateur a touché le dispositif ou non est contenue dans une trame de données radio reçue en provenance du dispositif de communication, ladite trame étant associée à l'intervalle temporel où l'amplitude du signal est maximale, et dans lequel ladite trame est distincte d'une autre trame de données radio reçue en provenance du dispositif de communication et associée à l'intervalle temporel où l'amplitude du signal est maximale.

4. Procédé de réception selon l'une quelconque des revendications 1 à 3, dans lequel l'information déterminant que l'utilisateur a touché ou non le dispositif de communication comprend un bit dont une première valeur détermine que l'utilisateur a touché le dispositif de communication, et dont une deuxième valeur détermine que l'utilisateur n'a pas touché le dispositif de communication.

5. Terminal ayant des capacités de communication intracorporelle via un utilisateur porteur dudit terminal, ledit terminal comprenant un processeur (PROC) qui est configuré pour mettre en œuvre ce qui suit :
- recevoir en provenance d'un dispositif de communication un signal caractérisant qu'un geste de rapprochement de l'utilisateur avec le dispositif a été effectué entre deux instants,
- dans le signal reçu, détecter dans quel intervalle temporel, compris entre les deux instants, l'amplitude du signal est maximale,
ledit terminal étant **caractérisé en ce que** le processeur (UT1) est configuré pour mettre en œuvre ce qui suit :
- à partir du signal reçu, détecter dans l'intervalle temporel une information déterminant que l'utilisateur a touché le dispositif ou non entre les deux instants,
- valider une transaction en fonction de la valeur de ladite information détectée.

6. Programme d'ordinateur comportant des instructions de code de programme pour la mise en œuvre du procédé de réception de signal selon l'une quelconque des revendications 1 à 4, lorsqu'il est exécuté sur le terminal de la revendication 5.

7. Support d'informations lisible par un ordinateur, et comportant des instructions d'un programme d'ordinateur selon la revendication 6.

8. Procédé d'émission de signal au cours d'une communication intracorporelle via un utilisateur porteur d'un terminal (1), comprenant ce qui suit, au niveau d'un dispositif de communication (2) :
- détecter (S5) un geste de rapprochement de l'utilisateur (U) avec le dispositif de communication (2), ledit geste étant effectué entre deux instants,
- émettre (S8) vers le terminal un signal caractérisant le geste de rapprochement, **caractérisé en ce que** le dispositif de communication génère dans le signal, dans un intervalle temporel compris entre les deux instants où l'amplitude du signal est maximale, une information (INF) déterminant que l'utilisateur a touché le dispositif ou non.

9. Procédé d'émission selon la revendication 8, dans lequel l'information déterminant que l'utilisateur a touché le dispositif ou non est contenue dans une trame de données radio envoyée au terminal, ladite trame étant envoyée entre les deux instants où l'amplitude du signal caractérisant le geste de rapprochement est maximale.

10. Procédé d'émission selon la revendication 8, dans lequel l'information déterminant que l'utilisateur a touché le dispositif ou non est contenue dans une trame de données radio envoyée au terminal, ladite trame étant envoyée entre les deux instants où l'amplitude du signal caractérisant le geste de rapprochement est maximale, et dans lequel ladite trame est distincte d'une autre trame de données radio envoyée au terminal entre lesdits deux instants.

11. Procédé d'émission selon l'une quelconque des revendications 8 à 10, dans lequel l'information déterminant que l'utilisateur a touché ou non le dispositif de communication comprend un bit dont une première valeur détermine que l'utilisateur a touché le dispositif de communication, et dont une deuxième valeur détermine que l'utilisateur n'a pas touché le dispositif de communication.

12. Dispositif de communication (2) ayant des capacités d'émission de signal au cours d'une communication intracorporelle via un utilisateur porteur d'un terminal, ledit dispositif comprenant un processeur (UT2) qui est configuré pour mettre en œuvre ce qui suit :
- détecter un geste de rapprochement de l'utilisateur (U) avec le dispositif de communication, ledit geste étant effectué entre deux instants,
- émettre vers le terminal un signal caractérisant le geste de rapprochement de l'utilisateur avec le dispositif,
ledit dispositif étant **caractérisé en ce que** le processeur (UT1) est configuré pour générer dans le signal, dans un intervalle temporel compris entre les deux instants où l'amplitude du signal est maximale, une information (INF) déterminant que l'utilisateur a touché le dispositif ou non.

13. Programme d'ordinateur comportant des instructions de code de programme pour la mise en œuvre du procédé d'émission de signal selon l'une quelconque des revendications 8 à 11, lorsqu'il est exécuté sur le dispositif de la revendication 12.

14. Support d'informations lisible par un ordinateur, et comportant des instructions d'un programme d'ordinateur selon la revendication 13.

15. Système de communication, **caractérisé en ce qu'**il comprend :
- un terminal (1) selon la revendication 5,
- un dispositif de communication (2) selon la revendication 12.

## Patentansprüche

1. Verfahren zum Empfangen eines Signals während einer intrakorporalen Kommunikation über einen ein Endgerät (1) tragenden Benutzer, umfassend, an dem Endgerät, Folgendes:
- Empfangen (S9), von einer Kommunikationsvorrichtung (2), eines Signals, das charakterisiert, dass eine Geste zur Annäherung des Benutzers an die Vorrichtung zwischen zwei Zeitpunkten durchgeführt worden ist,
- Detektieren, (S110), in dem empfangenen Signal, in welchen Zeitintervall zwischen den beiden Zeitpunkten die Amplitude des Signals am größten ist,
wobei das Verfahren **dadurch gekennzeichnet ist, dass** es, an dem Endgerät, Folgendes umfasst:
- ausgehend von dem empfangenen Signal Detektieren (S111, S112), in dem Zeitintervall, einer Information (INF), die bestimmt, ob der Benutzer die Vorrichtung zwischen den beiden Zeitpunkten berührt hat oder nicht,
- Validieren (S12) einer Transaktion in Abhängigkeit von dem Wert der detektierten Information.

2. Verfahren zum Empfangen nach Anspruch 1, wobei die Information, die bestimmt, ob der Benutzer die Vorrichtung berührt hat oder nicht, in einem von der Kommunikationsvorrichtung empfangenen Funkdatenrahmen enthalten ist, wobei der Rahmen dem Zeitintervall zugeordnet ist, in dem die Amplitude des Signals am größten ist.

3. Verfahren zum Empfangen nach Anspruch 1, wobei die Information, die bestimmt, ob der Benutzer die Vorrichtung berührt hat oder nicht, in einem von der Kommunikationsvorrichtung empfangenen Funkdatenrahmen enthalten ist, wobei der Rahmen dem Zeitintervall zugeordnet ist, in dem die Amplitude des Signals am größten ist, und wobei der Rahmen verschieden von einem anderen Funkdatenrahmen ist, der von der Kommunikationsvorrichtung empfangen wird und dem Zeitintervall zugeordnet ist, in dem die Amplitude des Signals am größten ist.

4. Verfahren zum Empfangen nach einem der Ansprüche 1 bis 3, wobei die Information, die bestimmt, ob der Benutzer die Kommunikationsvorrichtung berührt hat oder nicht, ein Bit umfasst, bei dem ein erster Wert bestimmt, dass der Benutzer die Kommunikationsvorrichtung berührt hat, und bei dem ein zweiter Wert bestimmt, dass der Benutzer die Kommunikationsvorrichtung nicht berührt hat.

5. Endgerät mit Fähigkeiten zur intrakorporalen Kommunikation über einen das Endgerät tragenden Benutzer, wobei das Endgerät einen Prozessor (PROC) umfasst, der dazu ausgestaltet ist, Folgendes ausführen:
- Empfangen, von einer Kommunikationsvorrichtung, eines Signals, das charakterisiert, dass eine Geste zur Annäherung des Benutzers an die Vorrichtung zwischen zwei Zeitpunkten durchgeführt worden ist,
- Detektieren, in dem empfangenen Signal, in welchen Zeitintervall zwischen den beiden Zeitpunkten die Amplitude des Signals am größten ist,
wobei das Endgerät **dadurch gekennzeichnet ist, dass** der Prozessor (UT1) dazu ausgestaltet ist, Folgendes auszuführen:
- ausgehend von dem empfangenen Signal Detektieren, in dem Zeitintervall, einer Information, die bestimmt, ob der Benutzer die Vorrichtung zwischen den beiden Zeitpunkten berührt hat oder nicht,
- Validieren einer Transaktion in Abhängigkeit von dem Wert der detektierten Information.

6. Computerprogramm, das Programmcodeanweisungen beinhaltet, die bei seiner Ausführung auf dem Endgerät des Anspruchs 5 das Verfahren zum Empfangen eines Signals nach einem der Ansprüche 1 bis 4 ausführen.

7. Datenträger, der von einem Computer gelesen werden kann und Anweisungen eines Computerprogramms nach Anspruch 6 beinhaltet.

8. Verfahren zum Senden eines Signals während einer intrakorporalen Kommunikation über einen ein Endgerät (1) tragenden Benutzer, umfassend, an einer Kommunikationsvorrichtung (2), Folgendes:
- Detektieren (S5) einer Geste zur Annäherung des Benutzers (U) an die Kommunikationsvorrichtung (2), wobei die Geste zwischen zwei Zeitpunkten durchgeführt wird,
- Senden (S8), an das Endgerät, eines die Geste zur Annäherung charakterisierenden Signals,
**dadurch gekennzeichnet, dass** die Kommunikationsvorrichtung in dem Signal in einem Zeitintervall zwischen den beiden Zeitpunkten, in dem die Amplitude des Signals am größten ist, eine Information (INF) erzeugt, die bestimmt, ob der Benutzer die Vorrichtung berührt hat oder nicht.

9. Verfahren zum Senden nach Anspruch 8, wobei die Information, die bestimmt, ob der Benutzer die Vorrichtung berührt hat oder nicht, in einem an das Endgerät gesendeten Funkdatenrahmen enthalten ist, wobei der Rahmen zwischen den beiden Zeitpunkten gesendet wird, zu denen die Amplitude des die Geste zur Annäherung charakterisierenden Signals am größten ist.

10. Verfahren zum Senden nach Anspruch 8, wobei die Information, die bestimmt, ob der Benutzer die Vorrichtung berührt hat oder nicht, in einem an das Endgerät gesendeten Funkdatenrahmen enthalten ist, wobei der Rahmen zwischen den beiden Zeitpunkten gesendet wird, zu denen die Amplitude des die Geste zur Annäherung charakterisierenden Signals am größten ist, und wobei der Rahmen verschieden von einem anderen Funkdatenrahmen ist, der an das Endgerät zwischen den beiden Zeitpunkten gesendet wird.

11. Verfahren zum Senden nach einem der Ansprüche 8 bis 10, wobei die Information, die bestimmt, ob der Benutzer die Kommunikationsvorrichtung berührt hat oder nicht, ein Bit umfasst, bei dem ein erster Wert bestimmt, dass der Benutzer die Kommunikationsvorrichtung berührt hat, und bei dem ein zweiter Wert bestimmt, dass der Benutzer die Kommunikationsvorrichtung nicht berührt hat.

12. Kommunikationsvorrichtung (2) mit Fähigkeiten zum Senden eines Signals während einer intrakorporalen Kommunikation über einen ein Endgerät tragenden Benutzer, wobei die Vorrichtung einen Prozessor (UT2) umfasst, der dazu ausgestaltet ist, Folgendes auszuführen:
- Detektieren einer Geste zur Annäherung des Benutzers (U) an die Kommunikationsvorrichtung, wobei die Geste zwischen zwei Zeitpunkten durchgeführt wird,
- Senden, an das Endgerät, eines die Geste zur Annäherung des Benutzers an die Vorrichtung charakterisierenden Signals,
wobei die Vorrichtung **dadurch gekennzeichnet ist, dass** der Prozessor (UT1) dazu ausgestaltet ist, in dem Signal in einem Zeitintervall zwischen den beiden Zeitpunkten, in dem die Amplitude des Signals am größten ist, eine Information (INF) zu erzeugen, die bestimmt, ob der Benutzer die Vorrichtung berührt hat oder nicht.

13. Computerprogramm, das Programmcodeanweisungen beinhaltet, die bei seiner Ausführung auf der Vorrichtung des Anspruchs 12 das Verfahren zum Senden eines Signals nach einem der Ansprüche 8 bis 11 ausführen.

14. Datenträger, der von einem Computer gelesen werden kann und Anweisungen eines Computerprogramms nach Anspruch 13 beinhaltet.

15. Kommunikationssystem, **dadurch gekennzeichnet, dass** es umfasst:
- ein Endgerät (1) nach Anspruch 5,
- eine Kommunikationsvorrichtung (2) nach Anspruch 12.

## Claims

1. Method for receiving a signal during an intra-body communication via a user carrying a terminal (1), comprising the following, at the level of the terminal:
- receiving (S9), from a communication device (2), a signal characterizing the fact that an approach gesture performed by the user toward the device has been performed between two times,
- in the received signal, detecting (S110) the time interval, between the two times, in which the amplitude of the signal is at a maximum,
said method being **characterized in that** it comprises the following, at the level of the terminal:
- from the received signal, detecting (S111, S112), in the time interval, information (INF) determining whether or not the user has touched the device between the two times,
- validating (S12) a transaction depending on the value of said detected information.

2. Reception method according to Claim 1, wherein the information determining whether or not the user has touched the device is contained in a radio data frame received from the communication device, said frame being associated with the time interval in which the amplitude of the signal is at a maximum.

3. Reception method according to Claim 1, wherein the information determining whether or not the user has touched the device is contained in a radio data frame received from the communication device, said frame being associated with the time interval in which the amplitude of the signal is at a maximum, and wherein said frame is distinct from another radio data frame received from the communication device and associated with the time interval in which the amplitude of the signal is at a maximum.

4. Reception method according to any one of Claims 1 to 3, wherein the information determining whether or not the user has touched the communication device comprises a bit whose first value determines that the user has touched the communication device, and whose second value determines that the user has not touched the communication device.

5. Terminal having capabilities for intra-body communication via a user carrying said terminal, said terminal comprising a processor (PROC) that is configured so as to implement the following:
- receive, from a communication device, a signal characterizing the fact that an approach gesture performed by the user toward the device has been performed between two times,
- in the received signal, detect the time interval, between the two times, in which the amplitude of the signal is at a maximum,
said terminal being **characterized in that** the processor (UT1) is configured so as to implement the following:
- from the received signal, detect, in the time interval, information determining whether or not the user has touched the device between the two times,
- validate a transaction depending on the value of said detected information.

6. Computer program comprising program code instructions for implementing the signal reception method according to any one of Claims 1 to 4 when it is executed on the terminal of Claim 5.

7. Computer-readable information medium containing instructions of a computer program according to Claim 6.

8. Method for transmitting a signal during an intra-body communication via a user carrying a terminal (1), comprising the following, at the level of a communication device (2):
- detecting (S5) an approach gesture performed by the user (U) toward the communication device (2), said gesture being performed between two times,
- transmitting (S8) a signal characterizing the approach gesture to the terminal,
**characterized in that** the communication device generates, in the signal, in a time interval between the two times at which the amplitude of the signal is at a maximum, information (INF) determining whether or not the user has touched the device.

9. Transmission method according to Claim 8, wherein the information determining whether or not the user has touched the device is contained in a radio data frame sent to the terminal, said frame being sent between the two times at which the amplitude of the signal characterizing the approach gesture is at a maximum.

10. Transmission method according to Claim 8, wherein the information determining whether or not the user has touched the device is contained in a radio data frame sent to the terminal, said frame being sent between the two times at which the amplitude of the signal characterizing the approach gesture is at a maximum, and wherein said frame is distinct from another radio data frame sent to the terminal between said two times.

11. Transmission method according to any one of Claims 8 to 10, wherein the information determining whether or not the user has touched the communication device comprises a bit whose first value determines that the user has touched the communication device, and whose second value determines that the user has not touched the communication device.

12. Communication device (2) having capabilities for signal transmission during an intra-body communication via a user carrying a terminal, said device comprising a processor (UT2) that is configured so as to implement the following:
- detect an approach gesture performed by the user (U) toward the communication device, said gesture being performed between two times,
- transmit a signal characterizing the approach gesture performed by the user toward the device to the terminal, said device being **characterized in that** the processor (UT1) is configured so as to generate, in the signal, in a time interval between the two times at which the amplitude of the signal is at a maximum, information (INF) determining whether or not the user has touched the device.

13. Computer program comprising program code instructions for implementing the signal transmission method according to any one of Claims 8 to 11 when it is executed on the device of Claim 12.

14. Computer-readable information medium containing instructions of a computer program according to Claim 13.

15. Communication system, **characterized in that** it comprises:
- a terminal (1) according to Claim 5,
- a communication device (2) according to Claim 12.
